# EUROPEAN PATENT APPLICATION

(11) **EP 4 804 486 A1**
(43) Date of publication of application: **09.09.2026**
(21) Application number: 24885004.2
(22) Date of filing: 01.11.2024
(51) Int. Cl.: H04L 51/046

(54) **INFORMATION REPLY METHOD AND APPARATUS, AND ELECTRONIC DEVICE AND STORAGE MEDIUM**

(30) Priority: 02.11.2023 CN 202311453804
(71) Applicant: Beijing Zitiao Network Technology Co., Ltd., Beijing 100190 (CN)
(72) Inventor: JI, Danni, Beijing 100028 (CN); LIU, Delin, Beijing 100028 (CN); DUAN, Ran, Beijing 100028 (CN)
(74) Representative: Grünecker Patent- und Rechtsanwälte PartG mbB
(86) International application number: PCT/CN2024/129490
(87) International publication number: WO 2025/093007

(57) **Abstract**

Embodiments of the present disclosure provide an information reply method and apparatus, an electronic device, and a storage medium. The method is applied to a first user side, and the method includes: displaying at least one recommended reply content in an input area of a chat interface, where the recommended reply content is configured to reply to the to-be-replied information sent by a second user, and at least one recommended reply content includes: at least one interaction event information item, at least one interaction event information item and at least one recommended reply text, or at least two recommended reply texts; and sending at least one reply information item corresponding to the at least one recommended reply content in chat interface, where at least one reply information item includes first reply information corresponding to respectively interaction event information item or second reply information corresponding to respectively recommended reply text.

## Description

### CROSS-REFERENCE TO RELATED APPLICATION(S)

The present application claims priority to Chinese Patent Application No. 202311453804.2, filed on November 2, 2023, and entitled "INFORMATION REPLY METHOD AND APPARATUS, AND ELECTRONIC DEVICE AND STORAGE MEDIUM ", the disclosure of which is incorporated herein by reference in its entirety.

### FIELD

Embodiments of the present disclosure relate to the field of computer technologies, and in particular, to an information reply method and apparatus, an electronic device, and a storage medium.

### BACKGROUND

In a chat scenario, a user may receive chat information sent by a chat object, and reply to the received chat information. However, currently, a reply manner for chat information is complicated, which is not conducive for the user to quickly reply to the received chat information.

### SUMMARY

Embodiments of the present disclosure provide an information reply method and apparatus, an electronic device, and a storage medium.

In a first aspect, an embodiment of the present disclosure provides an information reply method, applied to a first user side, where the method includes: displaying at least one recommended reply content in an input area of a chat interface, where the recommended reply content is configured to reply to the to-be-replied information sent by a second user, and the at least one recommended reply content includes: at least one interaction event information item, at least one interaction event information item and at least one recommended reply text, or at least two recommended reply texts, where the interaction event information is information of an interaction event associated with the to-be-replied information; and sending at least one reply information item corresponding to the at least one recommended reply content in the chat interface, where the at least one reply information item includes first reply information corresponding to respectively interaction event information item or second reply information corresponding to respectively recommended reply text.

In a second aspect, an embodiment of the present disclosure further provides an information reply apparatus, configured on a first user side, where the apparatus includes: a content display module, configured to display at least one recommended reply content in an input area of a chat interface, where the recommended reply content is configured to reply to the to-be-replied information sent by a second user, and the at least one recommended reply content includes: at least one interaction event information item, at least one interaction event information item and at least one recommended reply text, or at least two recommended reply texts, where the interaction event information is information of an interaction event associated with the to-be-replied information; and an information sending module, configured to send at least one reply information item corresponding to the at least one recommended reply content in the chat interface when a preset information reply condition is satisfied, where the at least one reply information item includes first reply information corresponding to respectively interaction event information item or second reply information corresponding to respectively recommended reply text.

In a third aspect, an embodiment of the present disclosure further provides an electronic device, including: one or more processors; and a memory, configured to store one or more programs, where the one or more programs, when executed by the one or more processors, cause the one or more processors to implement the information reply method according to the embodiments of the present disclosure.

In a fourth aspect, an embodiment of the present disclosure further provides a computer-readable storage medium, storing a computer program which, when executed by a processor, implements the information reply method according to the embodiments of the present disclosure.

According to the information reply method and apparatus, the electronic device, and the storage medium provided by the embodiments of the present disclosure, at least one recommended reply content is displayed in an input area of a chat interface, the displayed recommended reply content is configured to reply to the to-be-replied information sent by a second user, and the at least one recommended reply content includes: at least one interaction event information item, at least one interaction event information item and at least one recommended reply text, or at least two recommended reply texts, where the interaction event information is information of an interaction event associated with the to-be-replied information; and at least one reply information item corresponding to the at least one recommended reply content is sent in the chat interface, where the at least one reply information item includes first reply information corresponding to respectively interaction event information item or second reply information corresponding to respectively recommended reply text.

### BRIEF DESCRIPTION OF THE DRAWINGS

In combination with the drawings and with reference to the following specific implementations, the above-mentioned and other features, advantages, and aspects of the embodiments of the present disclosure will become more apparent. Throughout the drawings, the same or similar reference numerals denote the same or similar elements. It should be understood that the drawings are schematic and that parts and elements are not necessarily drawn to scale.
Fig. 1 is a schematic flowchart of an information reply method according to an embodiment of the present disclosure;
Fig. 2 is a schematic diagram of displaying recommended reply content according to an embodiment of the present disclosure;
Fig. 3 is a schematic diagram of displaying reply information according to an embodiment of the present disclosure;
Fig. 4 is a schematic diagram of displaying another reply information item according to an embodiment of the present disclosure;
Fig. 5 is a schematic diagram of displaying still another reply information item according to an embodiment of the present disclosure;
Fig. 6 is a schematic flowchart of another information reply method according to an embodiment of the present disclosure;
Fig. 7 is a schematic diagram of an added recommended reply content according to an embodiment of the present disclosure;
Fig. 8 is a schematic diagram of added recommended reply content according to an embodiment of the present disclosure;
Fig. 9 is a block diagram of an information reply apparatus according to an embodiment of the present disclosure; and
Fig. 10 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms, and should not be interpreted as being limited to the embodiments set forth herein; on the contrary, these embodiments are provided for a more thorough and complete understanding of the present disclosure. It should be understood that the drawings and embodiments of the present disclosure are only for exemplary purposes, and are not intended to limit the protection scope of the present disclosure.

It should be understood that steps described in method implementations of the present disclosure may be performed in different orders, or performed in parallel. In addition, the method implementations may include additional steps or omit performing illustrated steps. The scope of the present disclosure is not limited in this regard.

As used herein, the term "include/comprise" and variations thereof are open-ended inclusions, that is, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Relevant definitions of other terms will be given in the following description.

It should be noted that concepts such as "first" and "second" mentioned in the present disclosure are only configured to distinguish different apparatuses, modules, or units, and are not configured to limit the sequence of functions performed by these apparatuses, modules, or units or interdependence therebetween.

It should be noted that modifications of "one" and "multiple" mentioned in the present disclosure are illustrative rather than restrictive, and those skilled in the art should understand that unless otherwise clearly indicated in the context, they should be understood as "one or more".

The names of messages or information exchanged between multiple apparatuses in the implementations of the present disclosure are only for illustrative purposes, and are not intended to limit the scope of these messages or information.

It may be understood that before using the technical solutions disclosed in the embodiments of the present disclosure, it is necessary to inform the user of the type, range of use, use scenarios, etc., of personal information involved in the present disclosure, and obtain the authorization of the user, in an appropriate manner according to relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative, and does not limit the implementations of the present disclosure. Other manners that satisfy the relevant laws and regulations may also be applied in the implementations of the present disclosure.

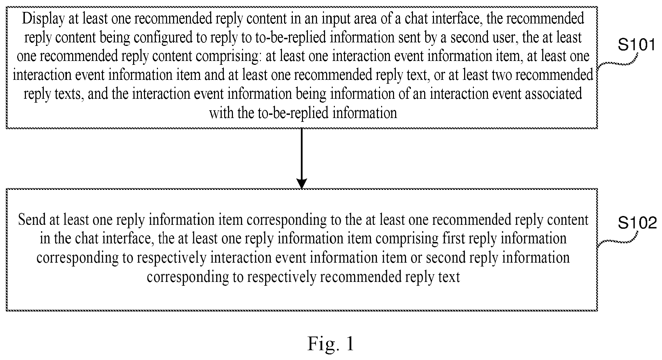

Fig. 1 is a schematic flowchart of an information reply method according to an embodiment of the present disclosure. The method may be applied to a first user side, and may be performed by an information reply apparatus. The apparatus may be implemented in software or hardware, may be configured in an electronic device, and typically may be configured in a computer, a mobile phone, or a tablet computer. The information reply method provided by the embodiment of the present disclosure is applicable to a scenario of replying to received to-be-replied information. As shown in Fig. 1, the information reply method provided by the embodiment of the present disclosure may include the following steps.

S101: at least one recommended reply content is displayed in an input area of a chat interface, where the recommended reply content is configured to reply to the to-be-replied information sent by a second user, the at least one recommended reply content includes at least one interaction event information item, at least one interaction event information item and at least one recommended reply text, or at least two recommended reply texts, and the interaction event information is information of an interaction event associated with the to-be-replied information.

The chat interface may be an interface for a chat between a first user and the second user. Exemplarily, the chat interface may include the input area and an information display area, the input area may be configured for the first user to input information content of to-be-sent chat information, and the information display area may be configured to display chat information between the first user and the second user. The to-be-replied information may be chat information that the first user receives in the chat interface and needs to reply to, and the to-be-replied information may be sent by a user other than the first user (such as the second user) in the chat interface.

The recommended reply content may be content recommended for the first user to use when replying to at least one to-be-replied information item in the chat interface. Exemplarily, with sufficient user authorization, the recommended reply content may be generated based on semantics of chat information (including the to-be-replied information) sent between the first user and the second user, and a specific generation manner of the recommended reply content is not limited in the embodiment.

Optionally, the recommended reply content may be the interaction event information or the recommended reply text. The interaction event information may be information of an interaction event associated with the to-be-replied information. The interaction event associated with the to-be-replied information may be, for example, an interaction event recommended for the first user or the second user to perform for the to-be-replied information. Different interaction event information items may correspond to different interaction events, for example, interaction event information in different paragraphs may correspond to different interaction events. The recommended reply text may be text content recommended for the first user to reply with to the to-be-replied information.

A type of the interaction event is not limited. Exemplarily, the interaction event may include a resource interaction event, a chat state switch event, or a form sending event, and so on. Taking an after-sales service scenario of an object as an example, the resource interaction event may be an event of performing resource interaction, such as an event of returning a virtual resource transferred when the object is acquired to the second user, and an event of sending or acquiring a virtual resource to/from the second user. The chat state switch event may be an event of switching a chat state of the chat interface, such as an event of switching the chat state of the chat interface to an end state, a waiting state, an auto reply state, or a non-auto reply state. The form sending event may be an event of sending a preset form, such as an event of sending a preset form to the second user or a third party other than the first user and the second user.

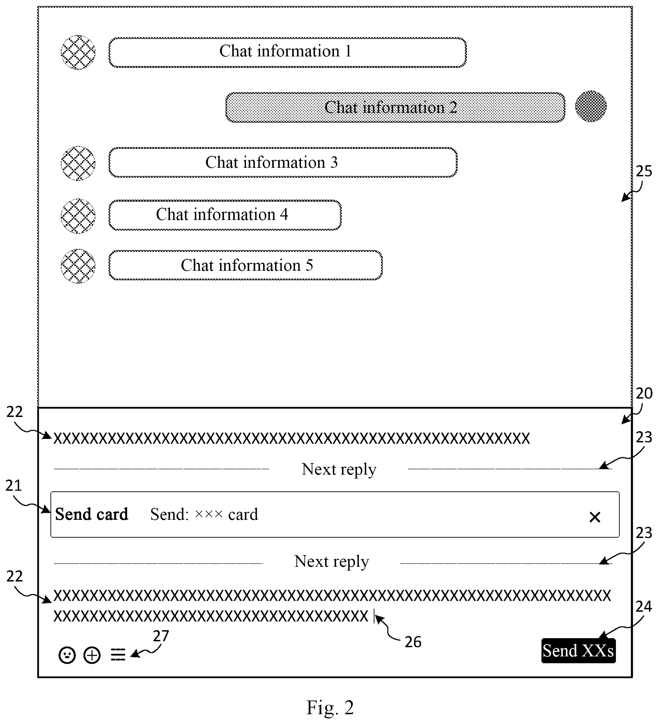

Specifically, when to-be-replied information is present in the chat interface, as shown in Fig. 2 (in which, as an example, an interaction event information item 21 and two recommended reply texts 22 are displayed in an input area 20 of the chat interface), at least one recommended reply content for replying to at least part of the to-be-replied information in the chat interface may be displayed in the input area 20 of the chat interface. For example, at least one interaction event information item 21 may be displayed in the input area 20 of the chat interface, at least one interaction event information item 21 and at least one recommended reply text 22 may be displayed in the input area 20 of the chat interface, or at least two recommended reply texts 22 may be displayed in the input area 20 of the chat interface, so that the first user may reply to the to-be-replied information in the chat interface based on the recommended reply content displayed in the input area.

In the embodiment, at least one interaction event information item or at least two recommended reply contents may be displayed in the input area of the chat interface, without the user having to select an interaction event associated with the to-be-replied information by performing a series of operations, and the user may view, in the input area, multiple recommended reply contents that will be sent subsequently in batch. Compared with a technical solution in which no recommended reply content is displayed or only one recommended reply content is displayed, the user does not need to frequently pay attention to the chat interface. In this way, a type and a display manner of the recommended reply content may be enriched, operations required when the user replies to the received chat information may be simplified, and a difficulty in replying to the chat information may be reduced.

In the embodiment, at least one recommended reply content may be displayed in the input area of the chat interface. Optionally, the at least one recommended reply content is obtained by performing text splitting on original reply text, and the original reply text is generated based on at least one to-be-replied information item in the chat interface; or different recommended reply contents are generated based on a group of to-be-replied information in the chat interface, and are configured to reply to the group of to-be-replied information in the chat interface.

In some implementations, the original reply text may be generated based on at least one to-be-replied information item in the chat interface, and the text splitting is performed on the original reply text to obtain at least two recommended reply contents. For example, when the generated original reply text is long reply text, for example, when a number of characters included in the original reply text is greater than a preset number of characters, paragraph segmentation may be performed based on text content of the original reply text to obtain at least two recommended reply contents, and the at least two recommended reply contents are displayed in different segments in the chat interface, to improve readability of the recommended reply content displayed in the chat interface and readability of subsequent reply information sent based on the recommended reply content. The original reply text may be understood as reply text before the text splitting is performed, and may be generated based on at least one to-be-replied information item in the chat interface, and a specific generation manner is not limited.

In some other implementations, the recommended reply content may be generated based on a group of to-be-replied information in the chat interface, and the group of to-be-replied information is replied to with the generated recommended reply content. Exemplarily, one recommended reply content may be generated based on the group of to-be-replied information in the chat interface. In this case, different recommended reply contents displayed in the input area of the chat interface may be configured to reply to different groups of to-be-replied information in the chat interface. Alternatively, multiple to-be-replied contents may be generated based on the group of to-be-replied information in the chat interface, for example, to-be-replied content is generated for at least part of to-be-replied information included in the group of to-be-replied information in the chat interface. In this case, different recommended reply contents displayed in the input area of the chat interface may be configured to reply to different to-be-replied information items in the group of to-be-replied information. A grouping manner of the to-be-replied information is not limited. For example, the to-be-replied information may be grouped based on a theme or topic corresponding to the to-be-replied information. Thus, a group of to-be-replied information in the chat interface may be a group of to-be-replied information about a same theme or topic.

In the embodiment, as shown in Fig. 2, when at least two recommended reply contents are displayed in the input area 20, adjacent recommended reply contents may be separated by a preset segmentation marker 23, so that the user may clearly distinguish different recommended reply contents, thereby avoiding confusion.

In some implementations, optionally, the displaying at least one recommended reply content in an input area of a chat interface includes: displaying at least two recommended reply contents and at least one preset segmentation marker in the input area of the chat interface, where the preset segmentation marker is configured to separate different recommended reply contents, and the preset segmentation marker supports at least one of a reply content addition operation, a reply content deletion operation, a reply content splitting operation, and a reply content merging operation.

The preset segmentation marker may be a segmentation marker configured to separate different recommended reply contents displayed in the input area of the chat interface, and a style of the preset segmentation marker is not limited.

In addition to being configured to separate different recommended reply contents displayed in the input area, the preset segmentation marker may also be configured for the user to perform at least part of editing operations on the recommended reply content displayed in the input area. The at least part of editing operations may include, for example, at least one of the reply content addition operation, the reply content deletion operation, the reply content splitting operation, and the reply content merging operation. For example, the user may perform the reply content addition operation by adding a preset segmentation marker before or after a recommended reply content, perform the reply content deletion operation by deleting a recommended reply content and a preset segmentation marker corresponding thereto, perform the reply content splitting operation by adding a preset segmentation marker between two characters included in a recommended reply content, or perform the reply content merging operation by deleting a preset segmentation marker between two recommended reply contents, and so on.

S102: at least one reply information item corresponding to the at least one recommended reply content is sent in the chat interface, where the at least one reply information item includes first reply information corresponding to respectively interaction event information item or second reply information corresponding to respectively recommended reply text.

The reply information may be chat information configured to reply to at least one to-be-replied information item in the chat interface. The reply information may correspond to the recommended reply content displayed in the input area of the chat interface. Optionally, the reply information may be in one-to-one correspondence with the recommended reply content displayed in the input area of the chat interface. In this case, different recommended reply contents may be configured to generate different reply information items, and a number of reply information items sent may be the same as a number of recommended reply contents displayed in the input area of the chat interface. The reply information may be the first reply information or the second reply information. Thus, the at least one reply information item sent may include at least one first reply information item or at least one second reply information item.

The first reply information may be reply information corresponding to the interaction event information displayed in the input area, and information content of the first reply information may be associated with an interaction event corresponding thereto. The interaction event corresponding to the first reply information may be understood as an interaction event to which the interaction event information corresponding to the first reply information in the input area belongs.

The second reply information may be reply information corresponding to the recommended reply text displayed in the input area, and information content of the second reply information may be associated with the recommended reply text corresponding thereto. For example, the second reply information may use the recommended reply text corresponding thereto as the information content.

Exemplarily, after at least one recommended reply content is displayed in the input area of the chat interface, at least one reply information item corresponding to the at least one recommended reply content displayed may be sent in the chat interface, for example, reply information in one-to-one correspondence with the at least one recommended reply information item displayed is sent in the chat interface.

In the embodiment, a timing of sending the at least one reply information item corresponding to the at least one recommended reply content displayed in the input area may be set as needed. Exemplarily, the at least one reply information item may be sent in the chat interface when a preset sending condition is satisfied. In this case, optionally, the sending at least one reply information item corresponding to the at least one recommended reply content in the chat interface includes: sending, when the preset sending condition is satisfied, the at least one reply information item corresponding to the at least one recommended reply content in the chat interface, where the preset sending condition includes receiving an information sending operation acting on the chat interface or a display duration of the recommended reply content reaching a second preset duration.

The information sending operation may be a trigger operation configured to instruct to send the at least one reply information item corresponding to the at least one recommended reply content displayed in the input area, such as an operation of triggering a sending control for the at least one recommended reply content. The second preset duration may be, for example, 30 s or 60 s, which is not limited in the embodiment.

For example, at least one recommended reply content may be displayed in the input area of the chat interface, and when the information sending operation from the first user is received, or when the display duration of the at least one recommended reply content in the input area reaches the second preset duration, the at least one reply information item corresponding to the at least one recommended reply content may be sent in the chat interface.

For example, as shown in Fig. 2, the sending control 24 may be displayed in the input area 20 of the chat interface. When at least one recommended reply content is displayed in the input area 20, a remaining duration until reply information corresponding to the at least one recommended reply content is sent may be displayed in the sending control 24 based on the second preset duration. Thus, when it is detected that the first user triggers the sending control 24, or when the remaining duration is zero, the at least one reply information item corresponding to the at least one recommended reply content displayed in the input area 20 may be sent.

It may be understood that if, before the remaining duration reaches zero, a reply content editing operation from the first user is received for the at least one recommended reply content displayed in the input area, recording and displaying of the remaining duration may be stopped. In this case, the reply information corresponding to the recommended reply content displayed in the input area may be sent when it is detected that the first user triggers the sending control in the input area.

In some implementations, the sending at least one reply information item corresponding to the at least one recommended reply content in the chat interface includes: for the interaction event information, sending the first reply information in the chat interface by using target content associated with the interaction event information as information content of the first reply information; or for the recommended reply text, sending the second reply information in the chat interface by using the recommended reply text as information content of the second reply information.

In the above implementations, when sending the reply information, for the interaction event information displayed in the input area, the target content associated with the interaction event information may be configured as the information content of the first reply information, and the first reply information is sent in the chat interface; for the recommended reply text displayed in the input area, the recommended reply text may be configured as the information content of the second reply information, and the second reply information is sent in the chat interface. The target content may be content associated with the interaction event information, such as an execution prompt content or an execution result of the interaction event, which may be configured as the information content of the first reply information corresponding to the interaction event information. The target content may be set in advance as needed.

Optionally, the first reply information is configured for the second user to trigger execution of an interaction event corresponding to the first reply information, or the first reply information is configured to prompt an execution result of an interaction event corresponding to the first reply information.

For example, the first user side may send the first reply information before the interaction event corresponding to the first reply information is executed. Thus, after receiving the first reply information, the second user side may display the first reply information, and when it is detected that the second user triggers the first reply information, execute the interaction event corresponding to the first reply information.

For another example, the first user side may send the first reply information after the interaction event corresponding to the first reply information is executed. For example, the first user side may execute the interaction event corresponding to the first reply information or execute the interaction event through a server, and send the first reply information to prompt the execution result of the interaction event.

Taking the interaction event being a resource interaction event as an example, the first reply information corresponding to the resource interaction event may be sent to the second user, and the resource interaction event is executed after the second user confirms, to perform resource interaction with the second user; or the resource interaction event may be executed to perform resource interaction with the second user, and the first reply information is sent to the second user to prompt the second user that resource interaction is performed.

Taking the interaction event being a chat state switch event as an example, the first reply information corresponding to the chat state switch event may be sent to the second user, and the chat state switch event is executed after the second user confirms, to switch a chat state of the chat interface; or the chat state switch event may be executed to switch the chat state of the chat interface, and the first reply information is sent to the second user to prompt the second user that the chat state of the chat interface is switched.

In the embodiment, sending forms of the first reply information and the second reply information may be set as needed. Exemplarily, the first reply information may be sent in a form of a card or text, and the card may be a display card for displaying information or an interactive card for performing interaction; and the second reply information may be sent in the form of text. In this case, optionally, the first reply information is sent in the form of an interactive card or text. Exemplarily, after receiving the interactive card, the second user may perform, based on the interactive card, an interaction operation associated with the interactive card.

In the embodiment, a sending manner of the at least one reply information item corresponding to the at least one recommended reply content displayed in the input area may be set as needed. For example, when there are at least two reply information items to be sent, the at least two reply information items may be sent at the same time, the at least two reply information items may be sent in batches, or the at least two reply information items may be sent sequentially.

In some implementations, the at least two reply information items to be sent may be sent sequentially, for example, the reply information items are sent sequentially according to a display sequence of the recommended reply content corresponding to the respective reply information items in the input area, to improve coherence and readability between the respective reply information items sent. In this case, at least two recommended reply contents are displayed in the input area, and the sending at least one reply information item corresponding to the at least one recommended reply content in the chat interface may include: sequentially sending, in the chat interface, reply information corresponding to respectively recommended reply content.

In the above implementations, when the reply information corresponding to respectively recommended reply content is sent sequentially, a sending duration between sending of reply information corresponding to two adjacent recommended reply contents is not limited. Optionally, a sending duration between two adjacent reply information items is a first preset duration or a random duration, and the random duration is within a preset duration range. For example, when the reply information is sent, the first preset duration may be configured as the sending duration between the two adjacent reply information items, or the sending duration between the two adjacent reply information items may be determined randomly.

The sending duration may be understood as a duration between sending of the two adjacent reply information items. The first preset duration may be, for example, 5s or 7s, which may be specifically set as needed. The random duration may be a duration determined randomly. For example, a preset duration range of the sending duration may be preset, and when reply information corresponding to respectively recommended reply content is sent, a duration is randomly selected from the preset duration range as the sending duration between the reply information sent this time and reply information corresponding to a previous recommended reply content.

In some implementations, in response to sending reply information corresponding to first recommended reply content in the input area, reply information corresponding to respectively recommended reply content in the input area may be displayed in the information display area. In this case, the information reply method provided by the embodiment may further include: displaying, in the information display area of the chat interface, the reply information corresponding to respectively recommended reply content, where the reply information includes sent reply information and unsent reply information, the sent reply information has a first display style in the chat interface, and the unsent reply information has a second display style in the information display area.

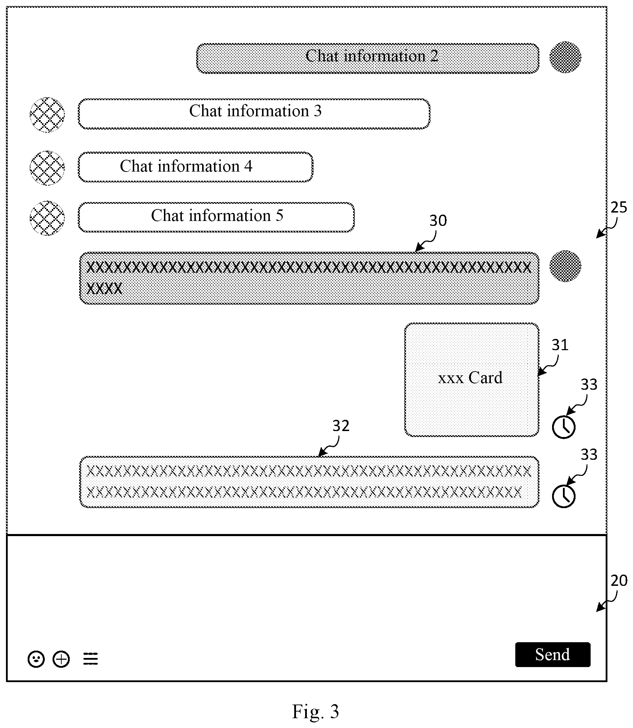

Exemplarily, as shown in Figs. 2 and 3, it is assumed that there are three recommended reply texts in the input area 20 of the chat interface, and three reply information items corresponding to the three recommended reply texts may be sent sequentially. When the first reply information item 30 is sent, the three reply information items may be displayed in the information display area 25 of the chat interface. At this time, the sent reply information (such as the first reply information item 30) and the unsent reply information (such as the second reply information item 31 and the third reply information item 32) may be displayed in the information display area 25, and the recommended reply content corresponding to the sent reply information and the recommended reply content corresponding to the unsent reply information may not be displayed in the input area 20.

When the sent reply information and the unsent reply information are displayed in the information display area 25, the sent reply information and the unsent reply information may have different display styles, so as to facilitate the first user to distinguish between the sent reply information and the unsent reply information. Specific display styles of the sent reply information and the unsent reply information are not limited. Exemplarily, as shown in Fig. 3, information content of the sent reply information and information content of the unsent reply information may have different display styles. For example, the information content of the sent reply information and the information content of the unsent reply information may be displayed in different fonts, font sizes, text colors, or background colors; or the sent reply information and the unsent reply information may have different sending identifications. For example, the sent reply information may carry a sent identification, and the sent identification indicates that the reply information corresponding thereto is the sent reply information; or the unsent reply information may carry an unsent identification 33, and the unsent identification 33 indicates that the reply information corresponding thereto is the unsent reply information (Fig. 3 shows an example in which the unsent reply information carries the unsent identification 33).

In the above implementations, when the unsent reply information is switched from an unsent state to a sent state, for example, after a reply information item is sent, a display style of the reply information in the information display area may be switched from the second display style to the first display style, to prompt the first user that the reply information item is sent. In this case, optionally, after sequentially sending, in the chat interface, the reply information corresponding to respectively recommended reply content, the method further includes: switching a display style of reply information sent this time in the chat interface from the second display style to the first display style.

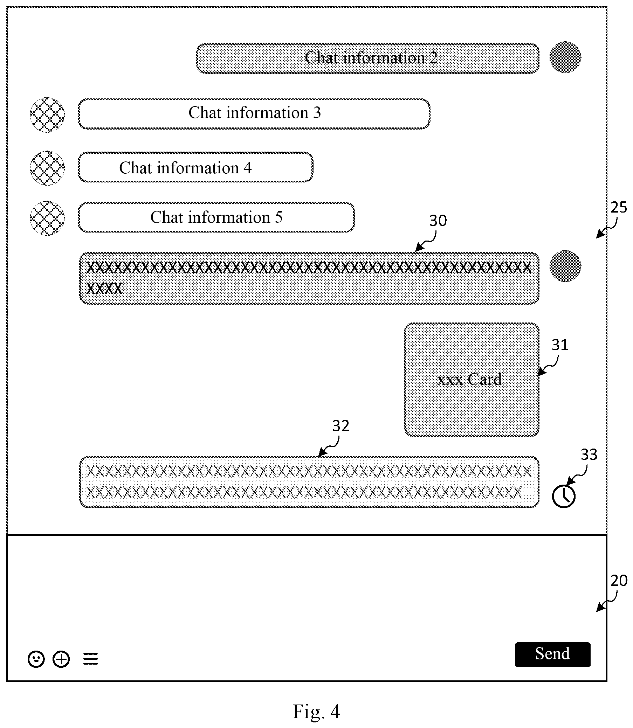

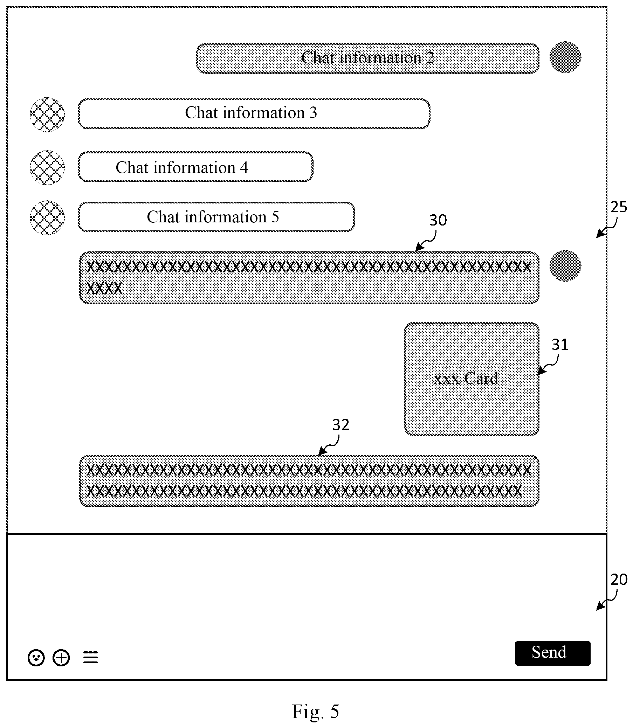

Please continue to refer to Fig. 3. When the first reply information item 30 has been sent and the second reply information item 31 and the third reply information item 32 have not been sent, the first reply information item 30 may be displayed in the information display area 25 in the first display style, and the second reply information item 31 and the third reply information item 33 may be displayed in the information display area 25 in the second display style. After the second reply information item 31 is sent and before the third reply information item 32 is sent, the second reply information item 31 may be switched from the second display style to the first display style. At this time, the third reply information item 32 is still displayed in the information display area 25 in the second display style, as shown in Fig. 4. After the third reply information item 32 is sent, the third reply information item 32 may be switched from the second display style to the first display style, as shown in Fig. 5.

In some other implementations, in response to sending reply information corresponding to a recommended reply content, the reply information corresponding to the recommended reply content may be displayed in the information display area. For example, when reply information corresponding to a recommended reply content is sent, display of the recommended reply content may be canceled in the input area, and the reply information corresponding to the recommended reply content is displayed in the information display area of the chat interface. At this time, only the sent reply information may be displayed in the information display area, and the recommended reply content corresponding to the unsent reply information may be displayed in the input area.

According to the information reply method provided by the embodiment, at least one recommended reply content is displayed in an input area of a chat interface, the displayed recommended reply content is configured to reply to the to-be-replied information sent by a second user, and the at least one recommended reply content includes: at least one interaction event information item, at least one interaction event information item and at least one recommended reply text, or at least two recommended reply texts, where the interaction event information is information of an interaction event associated with the to-be-replied information; and at least one reply information item corresponding to the at least one recommended reply content is sent in the chat interface, where the at least one reply information item includes first reply information corresponding to respectively interaction event information item or second reply information corresponding to respectively recommended reply text. According to the technical solution of the embodiment, at least one interaction event information item or at least two recommended reply contents are displayed in the input area of the chat interface, and the reply information corresponding to the displayed interaction event information or recommended reply content is sent, which may enrich types and display manners of the recommended reply content, simplify operations that a user needs to perform when replying to received chat information, and reduce difficulty in replying to the chat information.

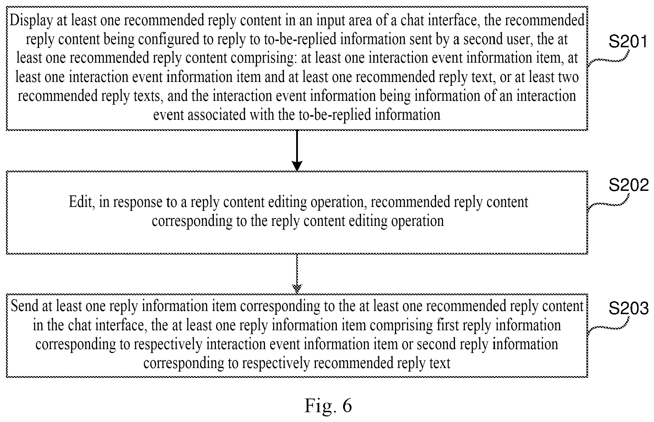

Fig. 6 is a schematic flowchart of another information reply method according to an embodiment of the present disclosure. The solution in the embodiment may be combined with one or more optional solutions in the above embodiment. Optionally, after the at least one recommended reply content is displayed in the input area of the chat interface, the method further includes: editing, in response to a reply content editing operation, recommended reply content corresponding to the reply content editing operation; and the sending at least one reply information item corresponding to the at least one recommended reply content in the chat interface includes: sending at least one reply information item corresponding to edited recommended reply content in the chat interface.

Correspondingly, as shown in Fig. 6, the information reply method provided by the embodiment may include the following steps.

S201: at least one recommended reply content is displayed in an input area of a chat interface, where the recommended reply content is configured to reply to the to-be-replied information sent by a second user, the at least one recommended reply content includes at least one interaction event information item, at least one interaction event information item and at least one recommended reply text, or at least two recommended reply texts, and the interaction event information is information of an interaction event associated with the to-be-replied information.

S202: the recommended reply content corresponding to the reply content editing operation is edited in response to the reply content editing operation.

The reply content editing operation may be an operation of editing the recommended reply content displayed in the input area. Optionally, the reply content editing operation includes at least one of a reply content addition operation, a reply content deletion operation, a reply content modification operation, a reply content splitting operation, and a reply content merging operation.

The reply content addition operation may be a trigger operation of adding a new recommended reply content in the input area, such as a trigger operation of adding a new preset segmentation marker before or after a recommended reply content displayed in the input area. The reply content deletion operation may be a trigger operation of deleting one or more recommended reply contents displayed in the input area, such as a deletion operation performed on recommended reply content in a selected state in the input area or a deletion operation performed on recommended reply content corresponding to a current display position of an input indicator (such as a cursor). The reply content modification operation may be an operation of modifying characters included in the recommended reply content in the input area. The reply content splitting operation may be a trigger operation of splitting a recommended reply content displayed in the input area into at least two recommended reply contents, such as a trigger operation of adding a new preset segmentation marker between two adjacent characters included in a recommended reply content. The reply content merging operation may be a trigger operation of merging at least two recommended reply contents displayed in the input area into a recommended reply content, such as a deletion operation of a preset segmentation marker between the at least two recommended reply contents.

The trigger operation of adding the new preset segmentation marker may be an operation of triggering an addition control displayed in the input area. In this case, the new preset segmentation marker may be added at a position where the input indicator is located. The deletion operation may be an operation of triggering a deletion control. In this case, the corresponding recommended reply content or the preset segmentation marker may be deleted. The deletion control may be a virtual control or a physical control.

Specifically, when the reply content editing operation from the first user is received for one or more recommended reply contents displayed in the input area, the one or more recommended reply contents may be edited based on the reply content editing operation.

In some implementations, the editing, in response to a reply content editing operation, recommended reply content corresponding to the reply content editing operation includes at least one of the following: in response to a reply content addition operation, adding a new recommended reply content in the input area, where the recommended reply content is configured for the first user to input new recommended reply content; in response to a reply content deletion operation, deleting, from the input area, recommended reply content corresponding to the reply content deletion operation; in response to a reply content modification operation, modifying recommended reply content corresponding to the reply content modification operation; in response to a reply content splitting operation, splitting recommended reply content corresponding to the reply content splitting operation into at least two new recommended reply contents; or in response to a reply content merging operation, merging at least two recommended reply contents corresponding to the reply content merging operation into a new recommended reply content.

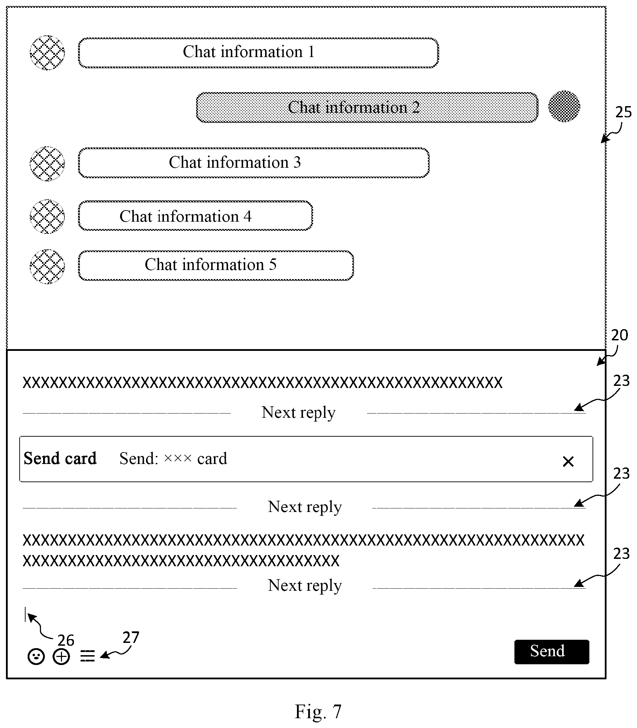

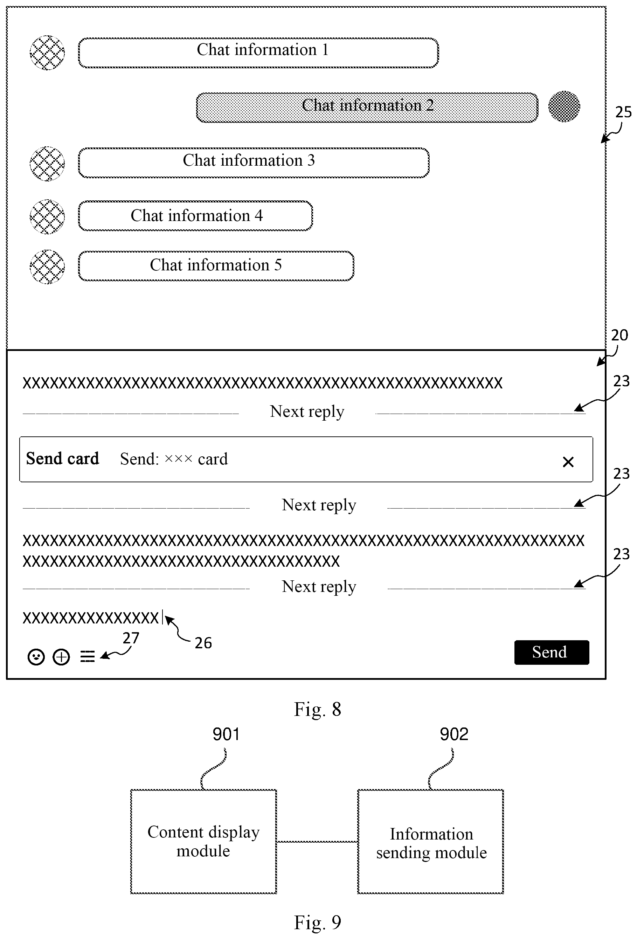

Exemplarily, as shown in Fig. 2 (Fig. 2 shows an example in which the input indicator 26 is displayed at an end of the last recommended reply content), when the reply content addition operation is received, for example, when it is detected that the first user moves the input indicator 26 to a position before or after a recommended reply content and then triggers the addition control 27 displayed in the input area 20, a new recommended reply content may be added at the position where the input indicator 26 is located, for example, a preset segmentation marker 23 is added after a paragraph where the input indicator 26 is located, and the input indicator 26 may be moved before or after the added preset segmentation marker 23, as shown in Fig. 7 (Fig. 7 shows an example in which the input indicator 26 is moved after the added preset segmentation marker 23). Thus, new recommended reply content may be input before or after the added preset segmentation marker 23 based on an input operation from the first user, as shown in Fig. 8 (Fig. 8 shows an example in which the new recommended reply content is input after the added preset segmentation marker 23).

When the reply content deletion operation is received, the recommended reply content corresponding to the reply content deletion operation may be deleted from the input area. For example, in response to the deletion operation, recommended reply content in a selected state in the input area may be deleted, or a recommended reply content corresponding to the current display position of the input indicator may be deleted.

When the reply content modification operation is received, the recommended reply content corresponding to the reply content modification operation may be modified based on the reply content modification operation, for example, characters included in the recommended reply content corresponding to the reply content modification operation may be modified.

When the reply content splitting operation is received, the recommended reply content corresponding to the reply content splitting operation may be split into at least two new recommended reply contents. For example, in the case where the input indicator is located between two adjacent characters included in a recommended reply content, when it is detected that the first user triggers the addition control in the input area, it may be determined that the reply content splitting operation is received, and in response to the reply content splitting operation, the recommended reply content is split into two new recommended reply contents by using the position where the input indicator is located as a splitting position.

When the reply content merging operation is received, the at least two recommended reply contents corresponding to the reply content merging operation may be merged into a new recommended reply content. For example, when a deletion operation is received for a preset segmentation marker between at least two consecutive recommended reply contents, it may be determined that the reply content merging operation is received, and in response to the reply content merging operation, the preset segmentation marker corresponding to the reply content merging operation is deleted to merge the at least two recommended reply contents into a recommended reply content.

S203: at least one reply information item corresponding to edited recommended reply content is sent in the chat interface, where the at least one reply information item includes first reply information corresponding to respectively interaction event information item or second reply information corresponding to respectively recommended reply text.

In the embodiment, in the case where the first user edits one or more recommended reply contents displayed in the input area, the at least one reply information item corresponding to the recommended reply content displayed in the edited input area may be sent in the chat interface.

According to the information reply method provided by the embodiment, the user is supported to edit the at least one recommended reply content displayed in the input area, so that the sent reply information may better meet the user's sending intention, and the practicality of the sent reply information may be improved.

Fig. 9 is a block diagram of an information reply apparatus according to an embodiment of the present disclosure. The apparatus may be configured on a first user side, may be implemented in software or hardware, may be configured in an electronic device, and typically may be configured in a computer, a mobile phone, or a tablet computer. The apparatus may reply to received to-be-replied information by performing an information reply method. As shown in Fig. 9, the information reply apparatus provided by the embodiment may include a content display module 901 and an information sending module 902.

The content display module 901 is configured to display at least one recommended reply content in an input area of a chat interface, where the recommended reply content is configured to reply to the to-be-replied information sent by a second user, the at least one recommended reply content includes at least one interaction event information item, at least one interaction event information item and at least one recommended reply text, or at least two recommended reply texts, and the interaction event information is information of an interaction event associated with the to-be-replied information.

The information sending module 902 is configured to send at least one reply information item corresponding to the at least one recommended reply content in the chat interface when a preset information reply condition is satisfied, where the at least one reply information item includes first reply information corresponding to respectively interaction event information item or second reply information corresponding to respectively recommended reply text.

According to the information reply apparatus provided by the embodiment, the at least one recommended reply content is displayed in the input area of the chat interface by the content display module, the displayed recommended reply content is configured to reply to the to-be-replied information sent by the second user, and the at least one recommended reply content includes: at least one interaction event information item, at least one interaction event information item and at least one recommended reply text, or at least two recommended reply texts, where the interaction event information is information of an interaction event associated with the to-be-replied information; and the at least one reply information item corresponding to the at least one recommended reply content is sent in the chat interface by the information sending module, where the at least one reply information item includes the first reply information corresponding to respectively interaction event information item or the second reply information corresponding to respectively recommended reply text. According to the technical solution of the embodiment, at least one interaction event information item or at least two recommended reply contents are displayed in the input area of the chat interface, and the reply information corresponding to the displayed interaction event information or recommended reply content is sent, which may enrich types and display manners of the recommended reply content, simplify operations that a user needs to perform when replying to received chat information, and reduce difficulty in replying to the chat information.

In the above solution, the information sending module 902 may be configured to: for the interaction event information, use target content associated with the interaction event information as information content of the first reply information, and send the first reply information in the chat interface; or for the recommended reply text, use the recommended reply text as information content of the second reply information, and send the second reply information in the chat interface.

In the above solution, the first reply information may be configured for the second user to trigger execution of an interaction event corresponding to the first reply information, or the first reply information may be configured for prompting an execution result of the interaction event corresponding to the first reply information.

In the above solution, the first reply information may be sent in a form of an interactive card or text.

In the above solution, at least two recommended reply contents may be displayed in the input area, and the information sending module 902 may be configured to: sequentially send, in the chat interface, reply information corresponding to respectively recommended reply content.

Further, the information reply apparatus provided by the embodiment may further include an information display module, configured to display, in an information display area of the chat interface, the reply information corresponding to respectively recommended reply content, where the reply information includes sent reply information and unsent reply information, the sent reply information has a first display style in the chat interface, and the unsent reply information has a second display style in the information display area.

Further, the information reply apparatus provided by the embodiment may further include a style switching module, configured to switch a display style of reply information sent this time in the chat interface from the second display style to the first display style after sequentially sending, in the chat interface, the reply information corresponding to respectively recommended reply content.

In the above solution, a sending duration between two adjacent reply information items may be a first preset duration or a random duration, and the random duration may be within a preset duration range.

Further, the information reply apparatus provided by the embodiment may further include a content editing module, configured to, after the at least one recommended reply content is displayed in the input area of the chat interface, edit, in response to a reply content editing operation, recommended reply content corresponding to the reply content editing operation; and the information sending module 902 may be configured to: send at least one reply information item corresponding to edited recommended reply content in the chat interface.

In the above solution, the reply content editing operation may include at least one of a reply content addition operation, a reply content deletion operation, a reply content modification operation, a reply content splitting operation, and a reply content merging operation, and the content editing module may include at least one of the following: a content addition unit, configured to, in response to the reply content addition operation, add a new recommended reply content in the input area, where the recommended reply content is configured for the first user to input new recommended reply content; a content deletion unit, configured to, in response to the reply content deletion operation, delete, from the input area, recommended reply content corresponding to the reply content deletion operation; a content modification unit, configured to, in response to the reply content modification operation, modify recommended reply content corresponding to the reply content modification operation; a content splitting unit, configured to, in response to the reply content splitting operation, split recommended reply content corresponding to the reply content splitting operation into at least two new recommended reply contents; or a content merging unit, configured to, in response to the reply content merging operation, merge at least two recommended reply contents corresponding to the reply content merging operation into a new recommended reply content.

In the above solution, the information sending module 902 may be configured to: send the at least one reply information item corresponding to the at least one recommended reply content in the chat interface when a preset sending condition is satisfied, where the preset sending condition includes that an information sending operation acting on the chat interface is received or a display duration of the recommended reply content reaches a second preset duration.

In the above solution, the content display module 901 may be configured to: display at least two recommended reply contents and at least one preset segmentation marker in the input area of the chat interface, where the preset segmentation marker is configured to separate different recommended reply contents, and the preset segmentation marker supports at least one of a reply content addition operation, a reply content deletion operation, a reply content splitting operation, and a reply content merging operation.

In the above solution, the at least one recommended reply content may be obtained by performing text splitting on original reply text, and the original reply text may be generated based on at least one to-be-replied information item in the chat interface; or different recommended reply contents may be generated based on a group of to-be-replied information in the chat interface, and may be configured to reply to the group of to-be-replied information in the chat interface.

The information reply apparatus provided by the embodiment of the present disclosure may perform the information reply method provided by any embodiment of the present disclosure, and has corresponding functional modules and beneficial effects for performing the information reply method. For technical details not described in detail in this embodiment, reference may be made to the information reply method provided by any embodiment of the present disclosure.

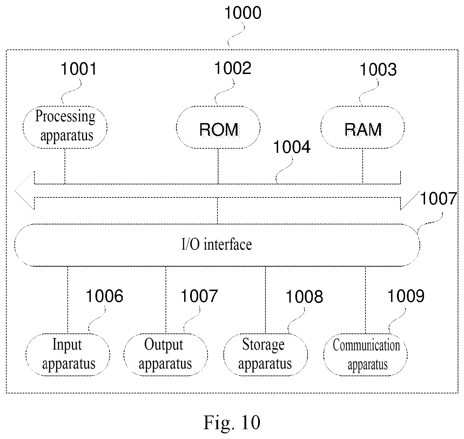

Reference is made to Fig. 10 below, which illustrates a schematic structural diagram of an electronic device (e.g., a terminal device) 1000 suitable for implementing an embodiment of the present disclosure. The terminal device in the embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and an in-vehicle terminal (such as an in-vehicle navigation terminal), and fixed terminals such as a digital TV and a desktop computer. The electronic device shown in Fig. 10 is merely an example, and should not impose any limitation on the function and scope of use of the embodiments of the present disclosure.

As shown in Fig. 10, the electronic device 1000 may include a processing apparatus 1001 (e.g., a central processing unit, a graphics processing unit, etc.), which may perform various appropriate actions and processing according to a program stored in a read-only memory (ROM) 1002 or a program loaded from a storage apparatus 1008 into a random access memory (RAM) 1003. The RAM 1003 further stores various programs and data required for operations of the electronic device 1000. The processing apparatus 1001, the ROM 1002, and the RAM 1003 are interconnected by means of a bus 1004. An input/output (I/O) interface 1005 is also connected to the bus 1004.

Usually, the following apparatuses may be connected to the I/O interface 1005: an input apparatus 1006 including, for example, a touch screen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a magnetic tape and a hard disk; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that it is not required to implement or provide all of the illustrated apparatuses. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network via the communication apparatus 1009, or installed from the storage apparatus 1008, or installed from the ROM 1002. When the computer program is executed by the processing apparatus 1001, the preceding functions defined in the method of the embodiments of the present disclosure are executed.

It should be noted that the preceding computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or used in conjunction with an instruction execution system, apparatus, or device. In the present disclosure, the computer-readable signal medium may include a data signal propagated on a baseband or as a part of a carrier, and computer-readable program code is carried therein. The data signal propagated in this manner may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in conjunction with an instruction execution system, apparatus, or device. The program code contained on the computer-readable medium may be transmitted in any suitable medium, including but not limited to a wire, an optical cable, a radio frequency (RF), or any suitable combination thereof.

In some implementations, clients and servers may communicate using any currently known or future developed network protocol, such as the hypertext transfer protocol (HTTP), and may be interconnected with any form or medium of digital data communication (e.g., a communication network). Examples of the communication network include a local area network ("LAN"), a wide area network ("WAN"), an internet (e.g., the Internet), a peer-to-peer network (e.g., an Ad-Hoc network), and any network currently known or to be developed in the future.

The preceding computer-readable medium may be included in the preceding electronic device, or it may exist alone without being assembled into the electronic device.

The preceding computer-readable medium carries one or more programs which, when executed by the electronic device, cause the electronic device to: display at least one recommended reply content in an input area of a chat interface, where the recommended reply content is configured to reply to the to-be-replied information sent by a second user, the at least one recommended reply content includes at least one interaction event information item, at least one interaction event information item and at least one recommended reply text, or at least two recommended reply texts, and the interaction event information is information of an interaction event associated with the to-be-replied information; and send at least one reply information item corresponding to the at least one recommended reply content in the chat interface, where the at least one reply information item includes first reply information corresponding to respectively interaction event information item or second reply information corresponding to respectively recommended reply text.

The computer program code for performing the operations of the present disclosure may be written in one or more programming languages or a combination thereof. The preceding programming languages include, but are not limited to, object-oriented programming languages such as Java, Smalltalk, and C++, and further include conventional procedural programming languages such as C or similar programming languages. The program code may be executed entirely on a user's computer, partly executed on a user's computer, executed as an independent software package, partly executed on a user's computer and partly executed on a remote computer, or entirely executed on a remote computer or server. In the case involving the remote computer, the remote computer may be connected to the user's computer through any kind of network, including a local area network (LAN) or a wide area network (WAN), or it may be connected to an external computer (e.g., connected via the Internet using an Internet service provider).

The flowchart and block diagrams in the drawings illustrate the possibly implemented architectures, functions, and operations of the system, the method, and the computer program product according to various embodiments of the present disclosure. In this regard, each block in the flowchart or block diagrams may represent a module, a program segment, or a part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagrams or the flowchart, and a combination of the blocks in the block diagrams or the flowchart may be implemented in a special purpose hardware-based system that execute specified functions or operations, or may be implemented in a combination of special purpose hardware and computer instructions.

The units involved in the embodiments of the present disclosure may be implemented in software or hardware. The name of a module does not constitute a limitation on the module itself under certain circumstances.

The functions described above may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the preceding. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the preceding.

According to one or more embodiments of the present disclosure, Example 1 provides an information reply method, applied to a first user side, where the method includes: displaying at least one recommended reply content in an input area of a chat interface, where the recommended reply content is configured to reply to the to-be-replied information sent by a second user, the at least one recommended reply content includes at least one interaction event information item, at least one interaction event information item and at least one recommended reply text, or at least two recommended reply texts, and the interaction event information is information of an interaction event associated with the to-be-replied information; and sending at least one reply information item corresponding to the at least one recommended reply content in the chat interface, where the at least one reply information item includes first reply information corresponding to respectively interaction event information item or second reply information corresponding to respectively recommended reply text.

According to one or more embodiments of the present disclosure, Example 2 is the method according to Example 1, where sending the at least one reply information item corresponding to the at least one recommended reply content in the chat interface includes: for the interaction event information, sending the first reply information in the chat interface by using target content associated with the interaction event information as information content of the first reply information; or for the recommended reply text, sending the second reply information in the chat interface by using the recommended reply text as information content of the second reply information.

According to one or more embodiments of the present disclosure, Example 3 is the method according to Example 2, where the first reply information is configured for the second user to trigger execution of the interaction event corresponding to the first reply information, or the first reply information is configured to prompt an execution result of the interaction event corresponding to the first reply information.

According to one or more embodiments of the present disclosure, Example 4 is the method according to Example 2, where the first reply information is sent in the form of an interactive card or text.

According to one or more embodiments of the present disclosure, Example 5 is the method according to Example 1, where at least two recommended reply contents are displayed in the input area, and sending the at least one reply information item corresponding to the at least one recommended reply content in the chat interface includes: sequentially sending, in the chat interface, reply information corresponding to respectively recommended reply content.

According to one or more embodiments of the present disclosure, Example 6 is the method according to Example 5, further including: displaying, in an information display area of the chat interface, the reply information corresponding to respectively recommended reply content, where the reply information includes sent reply information and unsent reply information, the sent reply information has a first display style in the chat interface, and the unsent reply information has a second display style in the information display area.

According to one or more embodiments of the present disclosure, Example 7 is the method according to Example 6, after sequentially sending, in the chat interface, the reply information corresponding to respectively recommended reply content, the method further includes: switching a display style of reply information sent this time in the chat interface from the second display style to the first display style.

According to one or more embodiments of the present disclosure, Example 8 is the method according to Example 5, where a sending duration between two adjacent reply information items is a first preset duration or a random duration, and the random duration is within a preset duration range.

According to one or more embodiments of the present disclosure, Example 9 is the method according to Example 1, after displaying the at least one recommended reply content in the input area of the chat interface, the method further includes: editing, in response to a reply content editing operation, recommended reply content corresponding to the reply content editing operation; and sending the at least one reply information item corresponding to the at least one recommended reply content in the chat interface includes: sending at least one reply information item corresponding to edited recommended reply content in the chat interface.

According to one or more embodiments of the present disclosure, Example 10 is the method according to Example 9, where the reply content editing operation includes at least one of a reply content addition operation, a reply content deletion operation, a reply content modification operation, a reply content splitting operation, and a reply content merging operation, and editing, in response to the reply content editing operation, the recommended reply content corresponding to the reply content editing operation includes at least one of the following: in response to the reply content addition operation, adding a new recommended reply content in the input area, where the recommended reply content is configured for the first user to input new recommended reply content; in response to the reply content deletion operation, deleting, from the input area, recommended reply content corresponding to the reply content deletion operation; in response to the reply content modification operation, modifying recommended reply content corresponding to the reply content modification operation; in response to the reply content splitting operation, splitting recommended reply content corresponding to the reply content splitting operation into at least two new recommended reply contents; or in response to the reply content merging operation, merging at least two recommended reply contents corresponding to the reply content merging operation into a new recommended reply content.

According to one or more embodiments of the present disclosure, Example 11 is the method according to any one of Examples 1-10, where sending the at least one reply information item corresponding to the at least one recommended reply content in the chat interface includes: sending the at least one reply information item corresponding to the at least one recommended reply content in the chat interface when a preset sending condition is satisfied, where the preset sending condition includes that an information sending operation acting on the chat interface is received or a display duration of the recommended reply content reaches a second preset duration.

According to one or more embodiments of the present disclosure, Example 12 is the method according to any one of Examples 1-10, where displaying the at least one recommended reply content in the input area of the chat interface includes: displaying at least two recommended reply contents and at least one preset segmentation marker in the input area of the chat interface, where the preset segmentation marker is configured to separate different recommended reply contents, and the preset segmentation marker supports at least one of a reply content addition operation, a reply content deletion operation, a reply content splitting operation, and a reply content merging operation.

According to one or more embodiments of the present disclosure, Example 13 is the method according to any one of Examples 1-10, where the at least one recommended reply content is obtained by performing text splitting on original reply text, and the original reply text is generated based on at least one to-be-replied information item in the chat interface; or different recommended reply contents are generated based on a group of to-be-replied information in the chat interface, and are configured to reply to the group of to-be-replied information in the chat interface.

According to one or more embodiments of the present disclosure, Example 14 provides an information reply apparatus, configured on a first user side, where the apparatus includes: a content display module, configured to display at least one recommended reply content in an input area of a chat interface, where the recommended reply content is configured to reply to the to-be-replied information sent by a second user, the at least one recommended reply content includes at least one interaction event information item, at least one interaction event information item and at least one recommended reply text, or at least two recommended reply texts, and the interaction event information is information of an interaction event associated with the to-be-replied information; and

an information sending module, configured to send at least one reply information item corresponding to the at least one recommended reply content in the chat interface when a preset information reply condition is satisfied, where the at least one reply information item includes first reply information corresponding to respectively interaction event information item or second reply information corresponding to respectively recommended reply text.

According to one or more embodiments of the present disclosure, Example 15 provides an electronic device, including: one or more processors; and a memory, configured to store one or more programs, where the one or more programs, when executed by the one or more processors, cause the one or more processors to implement the information reply method according to any one of Examples 1-13.

According to one or more embodiments of the present disclosure, Example 16 provides a computer-readable storage medium, storing a computer program which, when executed by a processor, implements the information reply method according to any one of Examples 1-13.

The preceding description is only preferred embodiments of the present disclosure and an explanation of technical principles employed. Those skilled in the art should understand that the scope of disclosure involved in the present disclosure is not limited to the technical solutions formed by the specific combination of the preceding technical features, and should also cover other technical solutions formed by any combination of the preceding technical features or their equivalent features without departing from the preceding concept of disclosure. For example, the preceding features and the technical features disclosed in the present disclosure (but not limited to) with similar functions may be replaced each other to form a technical solution.

In addition, while operations are depicted in a particular order, it should not be understood that these operations are required to be performed in a specific order as illustrated or in a sequential order. Under certain circumstances, multitasking and parallel processing may be advantageous. Likewise, while several specific implementation details are included in the preceding discussion, these should not be interpreted as limitations on the scope of the present disclosure. Certain features that are described in the context of separate embodiments may also be implemented in combination in a single embodiment. Conversely, various features described in the context of a single embodiment may also be implemented in multiple embodiments individually or in any suitable sub-combinations.

Although the subject matter has been described in language specific to structural features or logical actions of the method, it should be understood that the subject matter defined in the appended claims is not necessarily limited to the specific features or actions described above. Conversely, the specific features and actions described above are merely example forms for implementing the claims.

## Claims

1. An information reply method, applied to a first user side, comprising:
displaying at least one recommended reply content in an input area of a chat interface, the recommended reply content being configured to reply to to-be-replied information sent by a second user, the at least one recommended reply content comprising: at least one interaction event information item, at least one interaction event information item and at least one recommended reply text, or at least two recommended reply texts, and the interaction event information being information of an interaction event associated with the to-be-replied information; and
sending at least one reply information item corresponding to the at least one recommended reply content in the chat interface, the at least one reply information item comprising first reply information corresponding to respectively interaction event information item or second reply information corresponding to respectively recommended reply text.

2. The method of claim 1, wherein sending the at least one reply information item corresponding to the at least one recommended reply content in the chat interface comprises:
for the interaction event information, sending the first reply information in the chat interface by using target content associated with the interaction event information as information content of the first reply information; or
for the recommended reply text, sending the second reply information in the chat interface by using the recommended reply text as information content of the second reply information.

3. The method of claim 2, wherein the first reply information is configured for the second user to trigger execution of the interaction event corresponding to the first reply information, or the first reply information is configured to prompt an execution result of the interaction event corresponding to the first reply information.

4. The method of claim 2, wherein the first reply information is sent in a form of an interactive card or text.

5. The method of claim 1, wherein at least two recommended reply contents are displayed in the input area, and sending the at least one reply information item corresponding to the at least one recommended reply content in the chat interface comprises:
sequentially sending, in the chat interface, reply information corresponding to respectively recommended reply content.

6. The method of claim 5, further comprising:
displaying, in an information display area of the chat interface, the reply information corresponding to respectively recommended reply content, wherein the reply information comprises sent reply information and unsent reply information, the sent reply information has a first display style in the chat interface, and the unsent reply information has a second display style in the information display area.

7. The method of claim 6, wherein, after sequentially sending, in the chat interface, the reply information corresponding to respectively recommended reply content, the method further comprises:
switching a display style of reply information sent this time in the chat interface from the second display style to the first display style.

8. The method of claim 5, wherein a sending duration between two adjacent reply information items is a first preset duration or a random duration, and the random duration is within a preset duration range.

9. The method of claim 1, wherein, after displaying the at least one recommended reply content in the input area of the chat interface, the method further comprises:
editing, in response to a reply content editing operation, recommended reply content corresponding to the reply content editing operation; and
sending the at least one reply information item corresponding to the at least one recommended reply content in the chat interface comprises:
sending at least one reply information item corresponding to edited recommended reply content in the chat interface.

10. The method of claim 9, wherein the reply content editing operation comprises at least one of a reply content addition operation, a reply content deletion operation, a reply content modification operation, a reply content splitting operation, and a reply content merging operation, and editing, in response to the reply content editing operation, the recommended reply content corresponding to the reply content editing operation comprises at least one of the following:
in response to the reply content addition operation, adding a new recommended reply content in the input area, wherein the recommended reply content is configured for the first user to input new recommended reply content;
in response to the reply content deletion operation, deleting, from the input area, recommended reply content corresponding to the reply content deletion operation;
in response to the reply content modification operation, modifying recommended reply content corresponding to the reply content modification operation;
in response to the reply content splitting operation, splitting recommended reply content corresponding to the reply content splitting operation into at least two new recommended reply contents; or
in response to the reply content merging operation, merging at least two recommended reply contents corresponding to the reply content merging operation into a new recommended reply content.

11. The method of any of claims 1-10, wherein sending the at least one reply information item corresponding to the at least one recommended reply content in the chat interface comprises:
sending, in response to a preset sending condition being satisfied, the at least one reply information item corresponding to the at least one recommended reply content in the chat interface, the preset sending condition comprising that an information sending operation acting on the chat interface is received or a display duration of the recommended reply content reaches a second preset duration.

12. The method of any of claims 1-10, wherein displaying the at least one recommended reply content in the input area of the chat interface comprises:
displaying at least two recommended reply contents and at least one preset segmentation marker in the input area of the chat interface, wherein the preset segmentation marker is configured to separate different recommended reply contents, and the preset segmentation marker supports at least one of a reply content addition operation, a reply content deletion operation, a reply content splitting operation, and a reply content merging operation.

13. The method of any of claims 1-10, wherein the at least one recommended reply content is obtained by performing text splitting on original reply text, and the original reply text is generated based on at least one to-be-replied information item in the chat interface; or different recommended reply contents are generated based on a group of to-be-replied information in the chat interface, and are configured to reply to the group of to-be-replied information in the chat interface.

14. An information reply apparatus, configured on a first user side, wherein the apparatus comprises:
a content display module, configured to display at least one recommended reply content in an input area of a chat interface, the recommended reply content being configured to reply to to-be-replied information sent by a second user, the at least one recommended reply content comprising: at least one interaction event information item, at least one interaction event information item and at least one recommended reply text, or at least two recommended reply texts, and the interaction event information being information of an interaction event associated with the to-be-replied information; and
an information sending module, configured to send at least one reply information item corresponding to the at least one recommended reply content in the chat interface, in response to a preset information reply condition being satisfied, the at least one reply information item comprising first reply information corresponding to respectively interaction event information item or second reply information corresponding to respectively recommended reply text.

15. An electronic device, comprising:
at least one processor; and
a memory communicatively connected to the at least one processor,
wherein the memory stores a computer program executable by the at least one processor, and the computer program, when executed by the at least one processor, causes the at least one processor to perform the information reply method of any of claims 1-13.

16. A computer-readable storage medium, storing computer instructions which, when executed by a processor, cause the processor to implement the information reply method of any of claims 1-13.
